# EUROPEAN PATENT SPECIFICATION

(11) **EP 2 377 692 B1**
(45) Date of publication and mention of the grant of the patent: **24.07.2013**
(21) Application number: 10160169.8
(22) Date of filing: 16.04.2010
(51) Int. Cl.: B60B 39/00, B60C 11/16

(54) **System for operation of a vehicle in a risk situation**
System zur Bedienung eines Fahrzeugs in einer Gefahrensituation
Système de fonctionnement d'un véhicule dans une situation de risque

(43) Date of publication of application: 19.10.2011
(73) Proprietor: Volvo Car Corporation, 405 31 Göteborg (SE)
(72) Inventor: Janevik, Peter, 41304, Göteborg (SE)
(74) Representative: Widahl, Jenny Marie

(56) References cited:
- DE-A1- 3 201 602
- DE-A1-102006 037 658
- US-A- 4 826 077
- US-A1- 2002 079 707
- US-A1- 2004 193 351
- US-A1- 2006 060 441
- US-A1- 2006 213 595
- US-A1- 2009 165 912
- US-B1- 6 206 299

## Description

### TECHNICAL FIELD

The present invention relates to a system for operation of a vehicle in a risk situation.

### BACKGROUND OF THE INVENTION

It is since long well-known to use friction-enhancing means to improve the friction between tyres and the ground. For example, during winter time in the Nordic countries, many vehicles use winter tyres with studs to improve the grip of the wheels. The wheels are then normally changed once in the autumn and once in the spring, and the studs are used for the whole winter no matter the road conditions, sometimes causing unnecessary wear of the roads.

It is further also known to spread friction-enhancing substances, such as sand, on a road in order to improve the grip of the wheels. However, since it is impossible to know before-hand, where the grip is most needed, the sand is usually spread over a large portion of the road, which both takes time and causes costs.

Document US 2004193351 discloses a system according to the preamble of claim 1.

### SUMMARY OF THE INVENTION

The object of the present invention is to overcome or ameliorate at least one of the disadvantages of the prior art, or to provide a useful alternative.

It is desirable to provide a system being able to make the use of friction enhancing means more efficient.

The object above may be achieved by the invention according to claim 1.

In a first aspect of the present invention there is provided a system for operation of a vehicle in a risk situation, the system comprising
- detection means for detection of the risk situation;
- friction enhancing means for increasing the friction between a tyre of the vehicle and the ground;
- activation means for activation of the friction enhancing means upon detection of the risk situation.

The operation of the vehicle includes braking or acceleration, as well as manoeuvring of the vehicle. The manoeuvring includes steering around a possible danger.

By risk situation is meant a situation of potential danger or difficulty. The potential danger may be a collision with another vehicle or a moving or fixed object on or beside the road, e.g. a road sign. The danger may also be the risk of going off the road. The risk situation may be an emergency situation, but may also a potential emergency situation, i.e. an emergency situation that may be avoided, if the vehicle is operated appropriately.

The word situation implies that the risk situation in many cases is an unplanned happening, not known before-hand and not planned for. Examples of risk situations are movements of other vehicles, cyclists, pedestrians or animals, or unforeseen road conditions such as an obstacle on the road. The risk situation normally lasts for a limited amount of time, purely as an example, a few seconds or even milliseconds.

The aim of the system according to the invention is to reduce the risk that the potential danger will actually happen, e.g. the risk of a collision. If the danger is unavoidable, another aim of the invention is to reduce the negative consequences, e.g. to reduce possible personal injuries or damages to the vehicle. This is achieved since the system according to the invention facilitates the operation of the vehicle in the risk situation. The system may for example provide a more efficient braking, or a chance to steer around the danger, due to the increased friction. By steering around, a collision may be avoided. If colliding at a lower speed, achieved by the more efficient braking, there is less risk of injuring persons and the damages of the vehicle will be less and thereby the cost. If the risk is totally avoided, there may only be a cost for the friction enhancing means itself, e.g. to replace it. That cost is normally considerably lower as compared to for example the costs of a collision.

Dependent on type of friction enhancing means, it may be re-usable or it may need replacement after use. Preferably, it should be possible to continue driving the vehicle in a normal way after having activated the friction enhancing means. The replacement may be performed by a workshop and/or by the vehicle user himself.

Several detection means including radar, lidar, camera, IR-camera for detecting objects adjacent to the vehicle, primarily ahead of, are known, and will not be described in any detail in this document.

The friction enhancing means influences the friction between a tyre and the ground. In most cases the ground is the road itself, whereupon the vehicle is driving, but the ground may also be ice, snow, mud or any other material on the road. The vehicle may also end up outside the road, e.g. on the verge or in the terrain, and in that case the ground may also be grass or gravel.

The system according to the invention may form part of an active safety system of the vehicle. Such an active safety system may use sensors to detect upcoming threats and decide upon operations how to avoid the threats, e.g. by braking or steering around. The above-mentioned detection means could for example be an active safety sensor.

Modern vehicles may be equipped with ESP, i.e. Electronic Stability Program. The ESP only intervenes when it detects loss of steering control, i.e. when the vehicle is not going where the driver is steering. This may happen, for example due to slipping or skidding, when for example steering around an obstacle in order to avoid a collision, on slippery roads or due to hydroplaning. The ESP can estimate the direction of the skid, and then apply the brakes to individual wheels asymmetrically in order to oppose the skid and bringing the vehicle back in line with the driver's commanded direction. The ESP thus interacts with the vehicle by means of the brakes. However, a system according to the invention can improve the function of the ESP, by providing an increased friction between the tyre and the road. A detector of the ESP system can be used as the above-mentioned detection means.

The activation of the friction enhancing means by the activation means may occur automatically, i.e. without participation from the driver. Moreover, the operation in the risk situation may itself also be automatic, e.g. automatic braking of the vehicle. This may for example be the case, if the above system forms a part of an active safety system.

On the other hand, it may also be possible for the driver to manually activate the friction enhancing means when desired, e.g. if the vehicle has got stuck in mud, in snow or on ice. The driver may in that case form the detection means himself. Automatic and manual activation may be combined. However, a preferred embodiment of the invention includes the automatic activation.

The friction enhancing means may affect the friction between an individual tyre and the ground. It is often appropriate to affect both wheels of the same axle at the same time, or the tyres of all four wheels. Each wheel may have its friction enhancing means, or the same friction enhancing means may be used for more than one wheel. In a preferred embodiment, all four wheels have their corresponding friction enhancing means. Each wheel may have its own activation means, or a central activation means may be used for activating the friction enhancing means for more than one wheel.

The friction enhancing means may increase the friction between a tyre of the vehicle and the ground chemically and/or mechanically. A chemical means can be used to change the surface properties of the ground and/or tyre, thereby increasing the friction. A mechanical means may be used to increase the mechanical friction, e.g. by making the surfaces rougher. Examples are given below.

In an embodiment of the invention the friction enhancing means works together with the normal braking system of the vehicle. Consequently, no additional braking system intended for risk situations only is needed. Instead the friction enhancing means improves the function of the normal braking system by increasing the friction between the tyre and the ground. Thereby the risk of slipping, skidding or spinning is reduced.

The increased friction may be achieved by the friction enhancing means interacting with the tyre and/or the ground in order to enhance the friction between the tyre of the vehicle and the ground. The friction enhancing means may for example affect the surface properties of the tyre and/or ground. If the ground is affected, it is normally most important to affect the region of the ground being just ahead of the tyre, i.e. the ground whereupon the tyre will run in the immediate future. The effect on the ground need not be restricted to this region; however, this is normally the region where a friction enhancement will have the greatest effect.

The friction enhancing means may form an exchangeable part of the vehicle. The friction enhancing means can thereby be exchanged, if needed, when it has been used, and the vehicle will once again be prepared for a risk situation. It is further noticed, that the cost of a friction enhancing means is relatively low as compared to other vehicle parts. It is therefore considerably less expensive to replace a friction enhancing means as compared to repairing a vehicle, which has collided. As mentioned above, if the collision anyway is unavoidable, the system according to the invention reduces the damages and thereby the repair costs.

The system according to the invention may be installed during manufacturing of a vehicle. Further, it may also be installed in an existing vehicle, for instance when it visits the workshop for service. Thereby it is possible to upgrade existing vehicles.

The friction enhancing means may comprise a container filled with a liquid or granular substance, the substance being released from the container upon activation by the activation means. The liquid or granular substance may be adhesive, sticky or tacky. Examples of granular substances are sand, stone chips and road salt, possibly mixed with each other. Once the charge of the container has been released, it is recommendable to replace the container with a new one. The container is thus an example of an exchangeable part. The exchange may be performed by a workshop and/or by the vehicle user himself.

The liquid or granular substance may be applied to the tyre, the wheel and/or the ground. It may be applied in various ways, for example by spraying, coating or physically pressing it against the tyre and/or the ground.

The friction enhancing means may comprise a fabric or a net structure. The fabric or net structure may be activated by a gas generator in a similar way as an airbag.

In an embodiment the friction enhancing means is comprised in the tyre and is adapted to be activated by the activation means. In that case, the friction enhancing means may comprise means increasing the mechanical friction, such as deployable spikes or studs. The spikes or studs are hidden in the tyre during normal running. Upon activation they may be deployed from the tyre, e.g. by pushing them out, pulling the out or rotating them from a tangential direction to a radial direction. The activation means may in that case be magnetic or electric means attracting or repulsing the spikes or studs. Repulsion may be used to push outwards, e.g. when the activation means are situated in the wheel. Attraction may be used when the activation means are situated at a least a part of the circumference of the tyre, e.g. in the wheel housing. It would also be possible to use pressurized gas to push the spikes outwards.

The system according to the invention may further comprise means for estimating a risk level of the detected risk situation. For example, if a high risk for collision is estimated, it may be acceptable to use friction enhancing means, which are costly to replace and/ or partly destroys the vehicle, since these costs anyway are lower as compared to what the consequences would cost, if the collision would happen without using the friction enhancing means. On the other hand, if the estimated risk level is low, it would not make sense to use costly friction enhancing means. Further, it may not be worth using costly friction enhancing means, if it is estimated that the consequences of a collision would be small, e.g. due to low speed of the vehicle.

In an embodiment comprising risk level estimation, the system comprises more than one friction enhancing means. Dependent on the estimated risk level of the detected risk situation, a certain friction enhancing means of the more than one friction enhancing means may be activated by the activation means. The system may in that case have two, three, four or more friction enhancing means. These may work on the same wheel/s and/or on different wheels of the vehicle. In a preferred embodiment comprising more than one friction enhancing means, the friction enhancing means are different and have different costs for use. An appropriate friction enhancing means is then selected based on the estimated risk level. Thereby it is possible to make a trade-off between costs for use of the friction enhancing means and costs for the consequences if not used.

In another embodiment comprising risk level estimation, which may be combined with the previous embodiment, an activation level for the estimated risk level is selectable. The activation of the friction enhancing means by the activation means would then occur, if the estimated risk level of the detected risk situation is at least as high as the activation level. The activation level may be selected by the manufacturer, a workshop and/or the driver. It may be selected based on factors such as country, legislation, driver, state of the road, season etc.

In a second aspect of the present invention there is provided a use of friction enhancing means during operation of a vehicle as a response to a detected risk situation.

The different embodiments described above in relation to the first aspect of the invention are also relevant for the use described in the second aspect of the present invention.

In a third aspect of the present invention there is provided a method comprising the steps of:
- detecting a risk situation;
- activating friction enhancing means upon detection of the risk situation.

As described above the risk situation may be detected by above-mentioned detection means.

In an embodiment, the friction enhancing means are selected based on the estimated risk level.

The method may also comprise the step of selecting an activation level for the estimated risk level. The activation of the friction enhancing means would then occur, if the estimated risk level of the detected risk situation is at least as high as the activation level.

The method may further comprise the step of
- applying a liquid or granular substance to the tyre, the wheel and/or the ground.

The liquid or granular substance may be applied in various ways, for example by spraying, coating or physically pressing it against the tyre and/or the ground.

In a fourth aspect of the present invention, there is provided a vehicle with the above-mentioned system for operation of a vehicle in a risk situation

### BRIEF DESCRIPTION OF THE DRAWINGS

The present invention will hereinafter be further explained by means of non-limiting examples with reference to the appended figures wherein:
- Fig. 1: is a schematic overview of a vehicle comprising a system according to the invention.
- Fig. 2a-c: illustrates a risk situation.
- Fig. 3: illustrates a friction enhancing means of a system according to the invention.
- Fig. 4: illustrates another friction enhancing means.
- Fig. 5: illustrates friction enhancing means of a system according to the invention in the form of deployable spikes.
- Fig. 6: illustrates the deployable spikes of Figure 5 after activation.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other. The vehicles may for example be cars, buses, trucks or lorries.

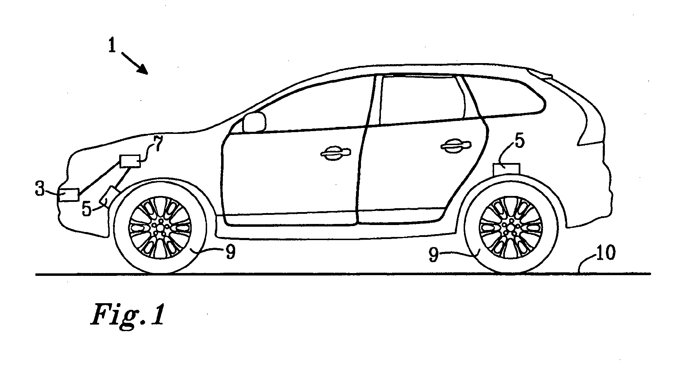

Figure 1 schematically illustrates a schematic overview of a vehicle 1 comprising a system according to the invention. The system comprises
- detection means 3 for detection of the risk situation;
- friction enhancing means 5 for increasing the friction between a tyre 9 of the vehicle and the ground 10;
- activation means for activation 7 of the friction enhancing means 5 upon detection of the risk situation.

The friction means 5 may be associated with the tyres 9 of all four wheels, with a pair of wheels located at the same axle or with an individual wheel.

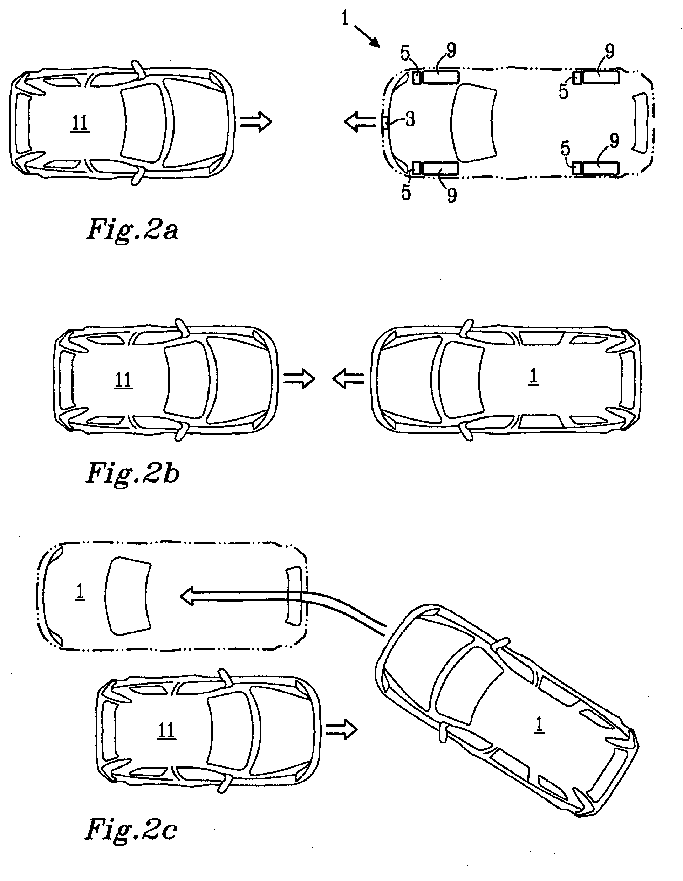

The detection means 3 for example may be radar, lidar, camera, IR-camera, either alone or in combinations. Figure 1 illustrates detection means directed in the forward direction. There may also be other detection means directed sideways or rearwards (not illustrated). Figures 2a-2c illustrate a risk situation. A vehicle 1 comprising a system according to the invention drives in a forward direction, as indicated by the arrow. It is further assumed that the vehicle 1 comprises an active safety system. Suddenly another vehicle 11 driving in an opposite direction comes over on the same half of the road as the vehicle 1. There is therefore a risk for a frontal collision. However, the detection means 3 of the vehicle 1 detects the opposing vehicle 11. The activation means 7 activates the friction enhancing means 5. The active safety system makes the vehicle 1 brake, thereby decreasing its speed as seen in Figure 2b. Since the collision anyway cannot be avoided, the active safety system makes the vehicle 1 steer around the opposing vehicle 11, as in Figure 2c, thereby avoiding the frontal collision. In this example the friction enhancing means 5 has made both the braking and the steering around more efficient by providing more friction between the tyres and the road, as compared to the case without any friction enhancing means 5.

In a similar way, assuming that the vehicle 1 does not comprise an active safety system, it may instead be the driver of the vehicle 1 actively braking and steering around.

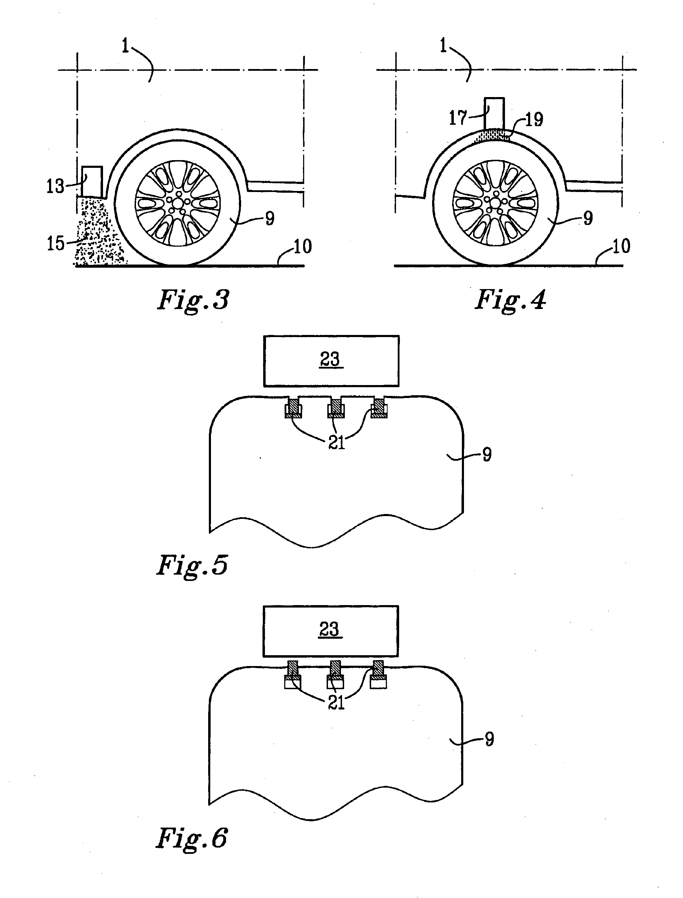

Figures 3-6 illustrate a number of friction enhancing means. They may be used alone or in combination.

In Figure 3, a container 13 is filled with a liquid or granular substance 15, e.g. sand. When the friction enhancing means is activated, the container 13 opens and releases the substance 15. The release may be speeded up by having over-pressure in the container 13. The substance 15 lands on the ground 10 immediately in front of the tyre 9. As the vehicle moves forward, the tyre 9 will run over ground 10 at least partly covered by the substance 15. Thereby enhanced friction is achieved. As an alternative (not illustrated) the substance 15 may be applied to the tyre 9 instead.

Figure 4 illustrates another setup, wherein the friction enhancing means 17 is located in the wheel house. A liquid or granular substance is applied on the tyre 9. In this example a chemical 19 is sprayed on to the tyre 9. The chemical gives the tyre a tacky surface, thereby improving its friction to the ground 10. As an alternative (not illustrated) the chemical may be applied to the ground 10 instead. The container 17 is then suitably located like the container 13 of Figure 3.

Figures 5 and 6 illustrate friction enhancing means comprised in the tyre 9, here in the form of deployable spikes 21. The upper part of tyre 9 is seen in cross-sectional view. During normal running of the vehicle, the spikes 21 are hidden in the tyre 9. When a risk situation is detected, the activation means 23 deploys the spikes 21. In this example magnetic means 23 are used, which attract the spikes 21 upon activation and thereby pulls them out of the tyre 9. The activation means may also be located within the wheel. In that case the spikes 21 may be activated by a repulsive force.

Further modifications of the invention within the scope of the appended claims are feasible. As such, the present invention should not be considered as limited by the embodiments and figures described herein. Rather, the full scope of the invention should be determined by the appended claims, with reference to the description and drawings. The systems of the invention may be used in vehicles with or without active safety systems. However, it is noted, that the system of the invention may improve the function of the active safety system.

## Claims

1. A system for operation of a vehicle (1) in an emergency situation or a potential emergency situation involving a collision with another vehicle (11) or a moving or fixed object on or beside the road, said system comprising
- detection means (3) for detection of said emergency situation or potential emergency situation, said detection means (3) being adapted for detecting objects adjacent to the vehicle, primarily ahead of the vehicle, said detection means (3) being radar, lidar, camera and/or I R-camera;
**characterized in that**
said system further comprises
- friction enhancing means (5, 13, 17, 21) for increasing the friction between a tyre (9) of said vehicle (1) and the ground (10), wherein said friction enhancing means (5, 13, 17, 21) interacts with the tyre (9) and/or the ground (10) in order to enhance the friction between the tyre (9) of said vehicle (1) and the ground (10);
- activation means (7, 23) for activation of said friction enhancing means (5, 13, 17, 21) upon detection of said emergency situation or potential emergency situation.

2. The system according to claim 1, wherein said friction enhancing means (5, 13, 17, 21) chemically and/or mechanically increases said friction between a tyre (9) of said vehicle (1) and the ground (10).

3. The system according to claim 1 or 2, wherein said friction enhancing means (5, 13, 17,21) works together with the normal braking system of said vehicle (1).

4. The system according to any one of the preceding claims, wherein said friction enhancing means (5, 13, 17, 21) forms an exchangeable part of said vehicle (1).

5. The system according to any one of the preceding claims, wherein said friction enhancing means (5, 13, 17) comprises a container (13, 17) filled with a liquid (19) or granular substance (15), said substance being released from said container (13, 17) upon activation by said activation means (7).

6. The system according to claim 5, wherein said liquid (19) or granular substance (15) is applied to the tyre (9) and/or the ground (10).

7. The system according to any one of the preceding claims, wherein said friction enhancing means (5, 13, 17) comprises a fabric or a net structure.

8. The system according to any one of the preceding claims, wherein said friction enhancing means (21) is comprised in the tyre (9) and is adapted to be activated by said activation means (23).

9. The system according to claim 8, wherein said friction enhancing means comprises means increasing the mechanical friction, such as deployable spikes (21) or studs.

10. The system according to any one of the preceding claims, said system further comprising means for estimating a risk level of said detected emergency situation or potential emergency situation.

11. The system according to claim 10, said system comprising more than one friction enhancing means (5, 13, 17, 21), wherein a certain friction enhancing means (5, 13, 17,21) of said more than one friction enhancing means (5, 13, 17, 21) is activated by said activation means (7, 23), dependent on said estimated risk level of said detected emergency situation or potential emergency situation.

12. The system according to claim 10 or 11, wherein an activation level for said estimated risk level is selectable; the activation of said friction enhancing means (5, 13, 17, 21) by said activation means (7, 23) occurring, if said estimated risk level of said detected emergency situation or potential emergency situation is at least as high as said activation level.

13. An active safety system of a vehicle comprising a system according to any one of the preceding claims.

14. A method comprising the steps of:
a) detecting an emergency situation or a potential emergency situation by means of detection means (3), said detection means (3) being radar, lidar, camera and/or IR-camera, said emergency situation or a potential emergency situation involving a collision with another vehicle (11) or a moving or fixed object on or beside the road, said detection means (3) being adapted for detecting objects adjacent to the vehicle, primarily ahead of the vehicle,
b) activating friction enhancing means (5,13,17,21) upon detection of said emergency situation or potential emergency situation, wherein said friction enhancing means (5, 13, 17, 21) interacts with the tyre (9) and/or the ground (10) in order to enhance the friction between the tyre (9) of said vehicle (1) and the ground (10).
c) braking and/or steering around said other vehicle (11) or moving or fixed object on or beside the road.

15. The method according to claim 14, wherein step c) is performed after step b).

16. The method according to claim 14 or 15 being performed by an active safety system.

## Patentansprüche

1. System zur Bedienung eines Fahrzeugs (1) in einer Gefahrensituation oder einer potenziellen Gefahrensituation, die einen Zusammenstoß mit einem anderen Fahrzeug (11) oder einem Objekt, das in Bewegung oder stationär auf oder neben der Straße ist, beinhaltet, wobei das System Folgendes aufweist
- ein Erfassungsmittel (3) zum Erfassen der Gefahrensituation oder potenziellen Gefahrensituation, wobei das Erfassungsmittel (3) angepasst ist, um Objekte, die mit dem Fahrzeug benachbart sind, in der Hauptsache vor dem Fahrzeug, zu erfassen, wobei das Erfassungsmittel (3) ein Radar, Lidar, eine Kamera und/oder eine Infrarotkamera ist,
**dadurch gekennzeichnet, dass**
das System ferner Folgendes aufweist
- Reibungsverstärkungsmittel (5, 13, 17, 21) zum Erhöhen der Reibung zwischen einem Reifen (9) des Fahrzeugs (1) und dem Boden (10), wobei das Reibungsverstärkungsmittel (5, 13, 17, 21) mit dem Reifen (9) und/oder dem Boden (10) in Wechselwirkung steht, um die Reibung zwischen dem Reifen (9) des Fahrzeugs (1) und dem Boden (10) zu verstärken,
- Aktivierungsmittel (7, 23) zum Aktivieren des Reibungsverstärkungsmittels (5, 13, 17, 21) beim Erfassen der Gefahrensituation oder potenziellen Gefahrensituation.

2. System nach Anspruch 1, wobei das Reibungsverstärkungsmittel (5, 13, 17, 21) die Reibung zwischen einem Reifen (9) des Fahrzeugs (1) und dem Boden (10) chemisch und/oder mechanisch erhöht.

3. System nach Anspruch 1 oder 2, wobei das Reibungsverstärkungsmittel (5, 13, 17, 21) mit dem normalen Bremssystem des Fahrzeugs (1) zusammenarbeitet.

4. System nach einem der vorhergehenden Ansprüche, wobei das Reibungsverstärkungsmittel (5, 13, 17, 21) einen austauschbaren Teil des Fahrzeugs (1) bildet.

5. System nach einem der vorhergehenden Ansprüche, wobei das Reibungsverstärkungsmittel (5, 13, 17) einen Behälter (13, 17), der mit einer Flüssigkeit (19) oder einer körnigen Substanz (15) gefüllt ist, aufweist, wobei die Substanz aus dem Behälter (13, 17) beim Aktivieren durch das Aktivierungsmittel (7) freigegeben wird.

6. System nach Anspruch 5, wobei die Flüssigkeit (19) oder die körnige Substanz (15) auf den Reifen (9) und/oder den Boden (10) aufgebracht wird.

7. System nach einem der vorhergehenden Ansprüche, wobei das Reibungsverstärkungsmittel (5, 13, 17) einen Stoff oder eine Netzstruktur aufweist.

8. System nach einem der vorhergehenden Ansprüche, wobei das Reibungsverstärkungsmittel (21) in dem Reifen (9) enthalten und angepasst ist, um von dem Aktivierungsmittel (23) aktiviert zu werden.

9. System nach Anspruch 8, wobei das Reibungsverstärkungsmittel Mittel zum Steigern der mechanischen Reibung aufweist, wie zum Beispiel ausfahrbare Spikes (21) oder Nägel.

10. System nach einem der vorhergehenden Ansprüche, wobei das System ferner Mittel zum Schätzen eines Gefahrenniveaus der erfassten Gefahrensituation oder potenziellen Gefahrensituation aufweist.

11. System nach Anspruch 10, wobei das System mehr als ein Reibungsverstärkungsmittel (5, 13, 17, 21) aufweist, wobei ein bestimmtes Reibungsverstärkungsmittel (5, 13, 17, 21) des mehr als einen Reibungsverstärkungsmittels (5, 13, 17, 21) durch das Aktivierungsmittel (7, 23) in Abhängigkeit von dem geschätzten Gefahrenniveau der erfassten Gefahrensituation oder potenziellen Gefahrensituation aktiviert wird.

12. System nach Anspruch 10 oder 11, wobei ein Aktivierungsniveau für das geschätzte Gefahrenniveau ausgewählt werden kann, wobei das Aktivieren des Reibungsverstärkungsmittels (5, 13, 17, 21) durch das Aktivierungsmittel (7, 23) eintritt, wenn das geschätzte Gefahrenniveau der erfassten Gefahrensituation oder potenziellen Gefahrensituation mindestens so hoch ist wie das Aktivierungsniveau.

13. Aktives Sicherheitssystem eines Fahrzeugs, das ein System nach einem der vorhergehenden Ansprüche aufweist.

14. Verfahren, das die folgenden Schritte aufweist:
a) Erfassen einer Gefahrensituation oder einer potenziellen Gefahrensituation mittels Erfassungsmitteln (3), wobei die Erfassungsmittel (3) ein Radar, Lidar, eine Kamera und/oder Infrarotkamera sind, wobei die Gefahrensituation oder eine potenzielle Gefahrensituation einen Zusammenstoß mit einem anderen Fahrzeug (11) oder einem Objekt, das in Bewegung oder stationär auf oder neben der Straße ist, beinhaltet, wobei das Erfassungsmittel (3) angepasst ist, um Objekte, die mit dem Fahrzeug benachbart sind, in der Hauptsache vor dem Fahrzeug, zu erfassen,
b) Aktivieren von Reibungsverstärkungsmitteln (5, 13, 17, 21) beim Erfassen der Gefahrensituation oder potenziellen Gefahrensituation, wobei das Reibungsverstärkungsmittel (5, 13, 17, 21) mit dem Reifen (9) und/oder dem Boden (10) in Wechselwirkung steht, um die Reibung zwischen dem Reifen (9) des Fahrzeugs (1) und dem Boden (10) zu verstärken,
c) Bremsen und/oder Lenken um das andere Fahrzeug (11) oder bewegliche oder stationäre Objekt auf oder neben der Straße.

15. Verfahren nach Anspruch 14, wobei Schritt c) nach Schritt b) ausgeführt wird.

16. Verfahren nach Anspruch 14 oder 15, das von einem aktiven Sicherheitssystem ausgeführt wird.

## Revendications

1. Système de fonctionnement d'un véhicule (1) dans une situation d'urgence ou une situation d'urgence potentielle, impliquant une collision avec un autre véhicule (11) ou avec un objet mobile ou fixe sur la route ou sur le bord de la route, ledit système comprenant :
- un moyen de détection (3) pour détecter ladite situation d'urgence ou ladite situation d'urgence potentielle, ledit moyen de détection (3) étant prévu pour détecter des objets adjacents au véhicule, principalement devant le véhicule, ledit moyen de détection (3) étant un radar, un lidar, une caméra et/ou une caméra IR ;
**caractérisé en ce que**
ledit système comprend en outre :
- un moyen d'augmentation de la friction (5, 13, 17, 21) pour augmenter la friction entre un pneu (9) dudit véhicule (1) et le sol (10), ledit moyen d'augmentation de la friction (5, 13, 17, 21) coopérant avec le pneu (9) et/ou le sol (10) afin d'augmenter la friction entre le pneu (9) dudit véhicule (1) et le sol (10) ;
- un moyen d'actionnement (7, 23) pour activer ledit moyen d'augmentation de la friction (5, 13, 17, 21) à la détection de ladite situation d'urgence ou de ladite situation d'urgence potentielle.

2. Système selon la revendication 1, dans lequel ledit moyen d'augmentation de la friction (5, 13, 17, 21) augmente chimiquement et/ou mécaniquement ladite friction entre un pneu (9) dudit véhicule (1) et le sol (10).

3. Système selon la revendication 1 ou 2, dans lequel ledit moyen d'augmentation de la friction (5, 13, 17, 21) fonctionne conjointement avec le système de freinage normal dudit véhicule (1).

4. Système selon l'une quelconque des revendications précédentes, dans lequel ledit moyen d'augmentation de la friction (5, 13, 17, 21) forme une partie remplaçable dudit véhicule (1).

5. Système selon l'une quelconque des revendications précédentes, dans lequel ledit moyen d'augmentation de la friction (5, 13, 17) comprend un contenant (13, 17) rempli d'un liquide (19) ou d'une substance granulaire (15), ladite substance étant libérée dudit contenant (13, 17) lors de l'activation par ledit moyen d'activation (7).

6. Système selon la revendication 5, dans lequel ledit liquide (19) ou ladite substance granulaire (15) est appliqué(e) sur le pneu (9) et/ou sur le sol (10).

7. Système selon l'une quelconque des revendications précédentes, dans lequel ledit moyen d'augmentation de la friction (5, 13, 17) comprend un tissu ou une structure en filet.

8. Système selon l'une quelconque des revendications précédentes, dans lequel ledit moyen d'augmentation de la friction (21) est inclus dans le pneu (9) et est prévu pour être activé par ledit moyen d'activation (23).

9. Système selon la revendication 8, dans lequel ledit moyen d'augmentation de la friction comprend un moyen augmentant la friction mécanique, tel que des pointes déployables (21) ou des crampons.

10. Système selon l'une quelconque des revendications précédentes, ledit système comprenant en outre un moyen pour estimer un niveau de risque de ladite situation d'urgence ou de ladite situation d'urgence potentielle détectée.

11. Système selon la revendication 10, ledit système comprenant plus d'un moyen d'augmentation de la friction (5, 13, 17, 21), un certain moyen d'augmentation de la friction (5, 13, 17, 21) desdits plus d'un moyen d'augmentation de la friction (5, 13, 17, 21) étant activé par ledit moyen d'activation (7, 23), selon ledit niveau de risque estimé de ladite situation d'urgence ou de ladite situation d'urgence potentielle détectée.

12. Système selon la revendication 10 ou 11, dans lequel un niveau d'activation pour ledit niveau de risque estimé peut être sélectionné ; l'activation dudit moyen d'augmentation de la friction (5, 13, 17, 21) par ledit moyen d'activation (7, 23) ayant lieu si ledit niveau de risque estimé de ladite situation d'urgence ou de ladite situation d'urgence potentielle détectée est au moins aussi élevé que ledit niveau d'activation.

13. Système de sécurité actif d'un véhicule comprenant un système selon l'une quelconque des revendications précédentes.

14. Procédé comprenant les étapes consistant à :
a) détecter une situation d'urgence ou une situation d'urgence potentielle au moyen d'un moyen de détection (3), ledit moyen de détection (3) étant un radar, un lidar, une caméra et/ou une caméra IR, ladite situation d'urgence ou une situation d'urgence potentielle impliquant une collision avec un autre véhicule (11) ou avec un objet mobile ou fixe sur la route ou sur le bord de la route, ledit moyen de détection (3) étant prévu pour détecter des objets adjacents au véhicule, principalement devant le véhicule,
b) activer un moyen d'augmentation de la friction (5, 13, 17, 21) à la détection de ladite situation d'urgence ou de ladite situation d'urgence potentielle, ledit moyen d'augmentation de la friction (5, 13, 17, 21) coopérant avec le pneu (9) et/ou le sol (10) afin d'augmenter la friction entre le pneu (9) dudit véhicule (1) et le sol (10) ;
c) freiner et/ou contourner ledit autre véhicule (11) ou l'objet mobile ou fixe sur la route ou sur le bord de la route.

15. Procédé selon la revendication 14, dans lequel l'étape c) est effectuée après l'étape b).

16. Procédé selon la revendication 14 ou 15, mis en oeuvre par un système de sécurité actif.
